(19) Europäisches Patentamt / European Patent Office / Office européen des brevets

(11) **EP 4 440 992 B1**

(12) **EUROPEAN PATENT SPECIFICATION**

(45) Date of publication and mention
of the grant of the patent:
**30.07.2025 Bulletin 2025/31**

(21) Application number: **23724368.8**

(22) Date of filing: **05.05.2023**

(51) International Patent Classification (IPC):
*C01G 33/00* (2006.01)   *C01G 37/00* (2006.01)
*H01M 4/131* (2010.01)

(52) Cooperative Patent Classification (CPC):
**C01G 37/006; C01G 33/00; C01G 33/006;
H01M 4/131; H01M 4/485;** C01P 2002/60;
C01P 2002/72; C01P 2002/74; C01P 2002/77;
C01P 2004/61; C01P 2004/80; C01P 2006/12;
H01M 10/0525; Y02E 60/10

(86) International application number:
**PCT/GB2023/051198**

(87) International publication number:
**WO 2023/214181 (09.11.2023 Gazette 2023/45)**

(54) **ACTIVE ELECTRODE MATERIAL**

AKTIVES ELEKTRODENMATERIAL

MATÉRIAU ACTIF D'ÉLECTRODE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.05.2022 GB 202206620**

(43) Date of publication of application:
**09.10.2024 Bulletin 2024/41**

(73) Proprietor: **Echion Technologies Limited**
**Cambridge CB22 3FG (GB)**

(72) Inventors:
• **MARTIN, Daniel Ziggy Chadney**
**Cambridge South West Way Sawston Cambridge
CB22
3FG (GB)**
• **LEWIS, Joshua Rhys**
**Cambridge South West Way Sawston Cambridge
CB22
3FG (GB)**
• **GROOMBRIDGE, Alexander Simon**
**Cambridge South West Way Sawston Cambridge
CB22
3FG (GB)**

(74) Representative: **Carpmaels & Ransford LLP**
**One Southampton Row**
**London WC1B 5HA (GB)**

(56) References cited:
WO-A1-2021/074593    CA-A1- 3 192 011
US-A1- 2019 296 343

• VOSKANYAN ALBERT A. ET AL: "Entropy
Stabilization of TiO 2 -Nb 2 O 5 Wadsley-Roth
Shear Phases and Their Prospects for Lithium-
Ion Battery Anode Materials", CHEMISTRY OF
MATERIALS, vol. 32, no. 12, 29 May 2020
(2020-05-29), US, pages 5301 - 5308,
XP093070033, ISSN: 0897-4756, DOI: 10.1021/
acs.chemmater.0c01553
• XIANGZHEN ZHU ET AL: "Zinc niobate materials:
crystal structures, energy-storage capabilities
and working mechanisms", JOURNAL OF
MATERIALS CHEMISTRY A, vol. 7, no. 44, 12
November 2019 (2019-11-12), GB, pages 25537 -
25547, XP055761576, ISSN: 2050-7488, DOI:
10.1039/C9TA07818E

EP 4 440 992 B1

**(Cont. next page)**

**EP 4 440 992 B1**

Remarks:

   The file contains technical information submitted
   after the application was filed and not included in this
   specification

Remarks:

   The file contains technical information submitted
   after the application was filed and not included in this
   specification

2

## Description

### Field of the Invention

The present invention relates to active electrode materials, andelectrodes comprising active electrode materials. Such materials are of interest as active electrode materials in metal-ion batteries, such as lithium-ion or sodium-ion batteries, for example as anode materials.

### Background

Lithium-ion (Li-ion) batteries are a commonly used type of rechargeable battery with a global market predicted to grow to $200bn by 2030. Li-ion batteries are the technology of choice for electric vehicles that have multiple demands across technical performance to environmental impact, providing a viable pathway for a green automotive industry.

A typical lithium-ion battery is composed of multiple cells connected in series or in parallel. Each individual cell is usually composed of an anode (negative polarity electrode) and a cathode (positive polarity electrode), separated by a porous, electrically insulating membrane (called a separator), immersed into a liquid (called an electrolyte) enabling lithium ions transport.

In most systems, the electrodes are composed of an active electrode material - meaning that it is able to chemically react with lithium ions to store and release them reversibly in a controlled manner - mixed if necessary with an electrically conductive additive (such as carbon) and a polymeric binder. A slurry of these components is coated as a thin film on a current collector (typically a thin foil of copper or aluminium), thus forming the electrode upon drying.

In the known Li-ion battery technology, the safety limitations of graphite anodes upon battery charging is a serious impediment to its application in high-power electronics, automotive and industry. Among a wide range of potential alternatives proposed recently, lithium titanate (LTO) and mixed niobium oxides are the main contenders to replace graphite as the active material of choice for high power, fast-charge applications.

Batteries relying on a graphitic anode are fundamentally limited in terms of charging rate. Under nominal conditions, lithium ions are inserted into the anode active material upon charging. When charging rate increases, typical graphite voltage profiles are such that there is a high risk that overpotentials lead to the potential of sites on the anode to become < 0 V vs. Li/Li+, which leads to a phenomenon called lithium dendrite electroplating, whereby lithium ions instead deposit at the surface of the graphite electrode as lithium metal. This leads to irreversible loss of active lithium and hence rapid capacity fade of the cell. In some cases, these dendritic deposits can grow to such large sizes that they pierce the battery separator and lead to a short-circuit of the cell. This can trigger a catastrophic failure of the cell leading to a fire or an explosion. Accordingly, the fastest-charging batteries having graphitic anodes are limited to charging rates of 5-7 C, but often much less.

Lithium titanate (LTO) anodes do not suffer from dendrite electroplating at high charging rate thanks to their high potential (1.6 V vs. Li/Li+), and have excellent cycle life as they do not suffer from significant volume expansion of the active material upon intercalation of Li ions due to their accommodating 3D crystal structure. LTO cells are typically regarded as high safety cells for these two reasons. However, LTO is a relatively poor electronic and ionic conductor, which leads to limited capacity retention at high rate and resultant power performance, unless the material is nanosized to increase specific surface area, and carbon-coated to increase electronic conductivity. This particle-level material engineering increases the porosity and specific surface area of the active material, and results in a significantly lower achievable packing density in an electrode. This is significant because it leads to low density electrodes and a higher fraction of electrochemically inactive material (e.g. binder, carbon additive), resulting in much lower gravimetric and volumetric energy densities.

A key measure of anode performance is the electrode volumetric capacity (mAh/cm$^3$), that is, the amount of electric charges (that is lithium ions) that can be stored per unit volume of the anode. This is an important factor to determine the overall battery energy density on a volumetric basis (Wh/L) when combined with the cathode and appropriate cell design parameters. Electrode volumetric capacity can be approximated as the product of electrode density (g/cm$^3$), active material specific capacity (mAh/g), and fraction of active material in the electrode. LTO anodes typically have relatively low specific capacities (c. 165 mAh/g, to be compared with c. 330 mAh/g for graphite) which, combined with their low electrode densities (typically <2.0 g/cm$^3$) and low active material fractions (<90%) discussed above, lead to very low volumetric capacities (<300 mAh/cm$^3$) and therefore low battery energy density and high $/kWh cost in various applications. As a result, LTO batteries/cells are generally limited to specific niche applications, despite their long cycle life, fast-charging capability, and high safety.

Titanium niobium oxides have been proposed for use as active electrode materials. US2012/0052401A1 discloses an oxide of the general formula $Li_xM_{1-y}Nb_yNb_2O_7$, wherein $0 \leqq x \leqq 3$, $0 \leqq y \leqq 1$ and M represents Ti or Zr. US2015/0086872A1 discloses an oxide based on $TiNb_2O_7$ having a specific form of carbon coating. US2019/0296343A1 and US2014/0120404A1 disclose mixtures of $TiNb_2O_7$ phases with $Ti_2Nb_{10}O_{29}$, $Nb_{14}TiO_{37}$,

$TiNb_{24}O_{64}$, and/or $TiO_2$ phases. US2021/0376307A1 discloses a Nb-Ti oxide in which a molar ratio of Nb to Ti is > 2 and comprising 100-2,000 ppm K, Fe, and/or P. EP3667805A1 discloses a Ti-containing oxide having a covering layer including Zn, In, Sn, Pb, Hg, Cu, Cd, Ag, and/or Bi. US2015/0125753A1 discloses a Nb composite oxide having a P compound on its a surface.

However, there remains a need to identify further active electrode materials, in particular with good properties for use in Li-ion cells intended for high-power/fast-charging applications. Identifying such materials e.g. without the need for extensive particle-level engineering and/or without coatings is an important step to low-cost battery materials for mass market uptakes.

**Summary of the Invention**

In a first aspect, the invention provides a mixed-phase oxide for use as an active electrode material; wherein the mixed-phase oxide comprises Nb and Ti and further comprises M(III) and/or M(II);

wherein M(III) is selected from Cr, Al, Ga, and mixtures thereof;
M(II) is selected from Zn, Cu, Mg, and mixtures thereof;
wherein the mixed-phase oxide comprises an interpenetrating mixture of a first phase and a second phase;
wherein the first phase has the crystal structure of $TiNb_2O_7$ and the second phase has the crystal structure of $Zn_2Nb_{34}O_{87}$.

The inventors have found that mixed-phase oxides according to the first aspect have excellent properties for use in high-power batteries designed for fast charge/discharge, for instance retaining a high capacity at high rates of 5C and 10C, as shown by the present examples.

In a second aspect, the invention provides an electrode comprising the mixed-phase oxide of the first aspect as an active electrode material.

In a third aspect, the invention provides a metal-ion battery comprising the electrode of the second aspect. Optionally the metal-ion battery is a lithium-ion battery or a sodium-ion battery, preferably a lithium-ion battery. Preferably the electrode forms the anode of the metal-ion battery.

**Summary of the Figures**

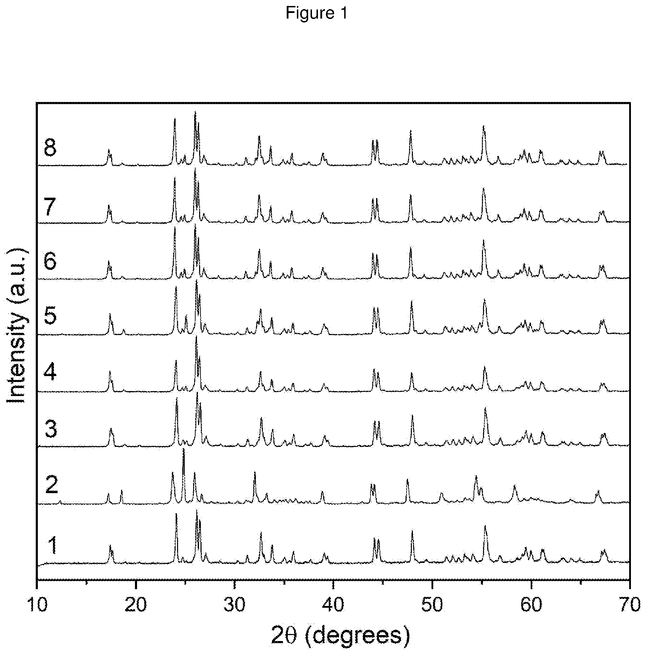

Figure 1: XRD of Samples 1-8

**Detailed Description of the Invention**

The mixed-phase oxide comprises Nb, Ti, M(III), and M(II). Oxides comprising Nb and at least one other cation may have a high redox voltage vs. Lithium >0.8V, enabling safe and long lifetime operation, crucial for fast charging battery cells. Moreover, Nb cations can have two redox reactions per atom, resulting in higher theoretical capacities than, for example, LTO.

The mixed-phase oxide comprises an interpenetrating mixture of a first phase and a second phase. It will be understood that an interpenetrating mixture is such that the first and second phases cannot be separated without destroying the mixed-phase oxide.

The first phase has the crystal structure of $TiNb_2O_7$ and the second phase has the crystal structure of $Zn_2Nb_{34}O_{87}$. It is believed that the interpenetrating mixture of the phases, together with the presence of M(III) and/or M(II), results in each of the two 'base' oxides defining the crystal structures (i.e. $TiNb_2O_7$ and pure $Zn_2Nb_{34}O_{87}$) being modified simultaneously by substituting elements, e.g. that the first phase contains M(III) and/or M(II) in addition to Ti and Nb and the second phase contains M(III) and/or Ti in addition to M(II) and Nb. The inventors have found that this simultaneous substitution approach improves the properties of each of the 'base' oxides which, combined with the interpenetrating mixture of the two phases, provides synergistic benefits compared to the first and second phases separately. For example, the mixed-phase oxide of the invention provides surprisingly improved performance at high rates of 5C and above. Moreover, adding M(II) and/or M(III) cations increases the entropy of the system and favours the formation of the desired crystal structures.

The first phase has the crystal structure of $TiNb_2O_7$, which may be considered to have a $ReO_3$-derived $MO_{3-x}$ crystal structure of the class known as Wadsley-Roth crystal structures. Wadsley-Roth crystal structures are considered to be a crystallographic off-stoichiometry of the $MO_3$ ($ReO_3$) crystal structure containing crystallographic shear, with simplified formula of $MO_{3-x}$. As a result, these structures typically contain $[MO_6]$ octahedral subunits in their crystal structure. Phases with these structures are believed to have advantageous properties for use as active electrode materials, e.g. in lithium-ion batteries.

The open tunnel-like $MO_3$ crystal structure provides for an ideal candidate for high capacity for Li-ion storage and high-rate intercalation/de-intercalation. The crystallographic off-stoichiometry present in the crystal structure causes the Wadsley-Roth crystallographic superstructure. These superstructures, compounded by other qualities such as the Jahn-Teller effect and enhanced crystallographic disorder by making use of multiple mixed cations, stabilise the crystal and keep the tunnels open and stable during intercalation, enabling extremely high rate performance due to high Li-ion diffusion rates (reported as ~$10^{-13}$ $cm^2$ $s^{-1}$).

The crystal structure of $TiNb_2O_7$ can be described as having a 3x3x∞ crystallographic block structure composed of $[MO_6]$ octahedra, where M is Ti or Nb. The crystal structure is typically monoclinic. The crystal structure of $TiNb_2O_7$ may be found at PDF card 00-039-1407. The unit cell parameters a, b, and c may be where a is 17.66-17.74 Å preferably 17.68-17.72 Å, b is 3.77-3.84 Å preferably 3.79-3.82 Å, and c is 11.86-11.94 Å preferably 11.88-11.92 Å. The crystal structure of the first phase may have unit cell parameters $\alpha$ and $\gamma$ each being about 90°, preferably wherein $\alpha = \gamma = 90°$; whereas $\beta$ may be 95.30-95.37° preferably 95.32-95.36°.

Without wishing to be bound by theory, the inventors believe that the addition of a larger cation, for example $Zn^{2+}$, into the Wadsley-Roth crystal structure alters the lattice parameters of the structure and could therefore enable better diffusion of lithium ions. Additionally, the doping of such non-redox active cations may avoid octahedral tilting on charge and discharge, imparting structural stability.

The second phase has the crystal structure of $Zn_2Nb_{34}O_{87}$, which may also be considered to have a $ReO_3$-derived $MO_{3-x}$ Wadsley-Roth crystal structure. The crystal structure of $Zn_2Nb_{34}O_{87}$ can be described as having a 3x4x∞ crystallographic block structure composed of $[MO_6]$ octahedra, where M is Zn or Nb. When M(II) is not present the crystal structure $Zn_2Nb_{34}O_{87}$ is achieved with M(III) or Ti adopting the Zn sites. It is believed that the large block size is advantageous for rapid insertion and removal of lithium as compared to other Wadsley-Roth structures of smaller octahedral block sizes, with potentially higher stability than those with larger octahedral block sizes. The Zn octahedra may be randomly distributed in the structure or may have a preference for particular sites such as at the edge, or corner of the blocks. This equates to 2/3 of one Zn cation per block.

The crystal structure of the second phase can be monoclinic or orthorhombic, or can be considered as a mixture of monoclinic and orthorhombic. The crystal structure of monoclinic $Zn_2Nb_{34}O_{87}$ may be found at ICDD crystallography database entry PDF card 00-013-0317. The crystal structure of orthorhombic $Zn_2Nb_{34}O_{87}$ may be found at PDF card 04-021-7859.

When refined to the monoclinic crystal structure, the unit cell parameters a, b, and c may be such that a is 15.52-15.58 Å preferably 15.53-15.57 Å, b is 3.79-3.84 Å preferably 3.80-3.83 Å, and c is 20.53-20.66 Å preferably 20.54-20.65 Å; the unit cell parameters $\alpha$ and $\gamma$ each being about 90°, preferably wherein $\alpha = \gamma = 90°$; $\beta$ may be 113.00-113.75° preferably 113.06-113.69°.

The crystal structure of a phase may be determined by analysis of X-ray diffraction (XRD) patterns obtained using Cu K-$\alpha$ radiation, as is widely known. For instance, XRD patterns obtained from a given material can be compared to known XRD patterns to confirm the crystal structure, e.g. via public databases such as the ICDD crystallography database. Rietveld analysis and Pawley analysis can also be used to determine the crystal structure of materials, in particular for the unit cell parameters. Therefore, the crystal structure of the first phase and the second phase may be determined by XRD.

An XRD pattern of the mixed-phase oxide preferably exhibits a peak A attributed to the first phase at $2\theta = 26.0 \pm 0.1°$. An XRD pattern of the mixed-phase oxide preferably exhibits a peak B attributed to the second phase at $2\theta = 24.9 \pm 0.1°$. The ratio of the intensity $I_B$ of peak B to the intensity $I_A$ of peak A may be $0 < I_B / I_A \leq 0.4$, or $0.01 \leq I_B / I_A \leq 0.25$, or preferably $0.05 \leq I_B / I_A \leq 0.22$. In a particular example the ratio is $0.07 \leq I_B / I_A \leq 0.16$. The peak intensity ratio may be conveniently calculated using the normalised height of peaks A and B.

The weight ratio of the first phase to the second phase may be 199:1 - 1:1, or 99:1 - 3:1, or 50:1 - 8:1.

The weight ratio of phases in the mixed-phase oxide may be determined by refinement of an XRD pattern of the mixed-phase oxide. Target weight ratios may be obtained by controlling the relative amounts of the elemental precursors used in the synthesis.

Other phases may be present in the mixed-phase oxide. For instance, the first phase and the second phase may form at least 80 wt%, at least 90 wt%, or at least 95 wt% of the mixed-phase oxide. The first phase and the second phase may form substantially all of the mixed-phase oxide, for example with less than 1 wt% of other phases. Preferably the first phase forms at least 85 wt%, or at least 90 wt%, or at least 92 wt% of the mixed-phase oxide.

Nb is preferably the major cation present in the mixed-phase oxide. For example, the mixed-phase oxide may comprise 66-80 at%, or 66.5-75 at%, or 66.9-69.9 at% Nb relative to all cations.

The mixed-phase oxide may comprise 33-17 at%, or 33.1-24 at%, or 33.2-30 at% Ti relative to all cations.

The mixed-phase oxide may comprise >0-1 at%, or 0.01-0.4 at%, or 0.01-0.2 at% M(III) relative to all cations.

The mixed-phase oxide may comprise >0-2 at%, or 0.01-1 at%, or 0.02-0.5 at% M(II) relative to all cations.

The combined amount of M(III) and M(II) may be $\geq 0.05$ at% $\geq 0.5$ at% or $\geq 0.6$ at% relative to the amount of Nb.

The atomic ratio of Ti : Nb may be at least 0.3 : 1, or at least 0.4 : 1, or 0.42 : 1 - 0.5 : 1.

It will be understood that the amounts of Nb, Ti, M(III), and/or M(II) may be combined to further define the mixed-phase oxide.

M(III) represents a cation which typically adopts a 3+ oxidation state in an oxide. M(III) is selected from Cr, Al, Ga and mixtures thereof; or Cr, Al, and mixtures thereof. Preferably M(III) is Cr.

M(II) represents a cation which typically adopts a 2+ oxidation state in an oxide. M(II) is selected from Zn, Cu, Mg, and mixtures thereof; or Zn, Cu, and mixtures thereof. Preferably M(II) is Zn.

Preferably the mixed-phase oxide comprises M(III), most preferably M(III) and M(II), in particular when M(III) is Cr and M(II) is Zn.

The mixed-phase oxide may optionally further comprise at least one additional element; optionally wherein the additional element is selected from Zr, Hf, V, Fe, Ta, Mo, W, Mn, Co, Ni, Cd, B, Si, Sn, P, and mixtures thereof; or Zr, V, Fe, Mo, W, Mn, Co, Ni, Cd, B, Si, P, and mixtures thereof; or preferably Zr, V, Fe, Mo, W, Cu, P, and mixtures thereof. The at least one additional element may be present in an amount of $\leq 1.5$ at% or 0.01-1.0 at% relative to all cations. The at least one additional element may be present in a total amount of $\leq 5$ at% or $\leq 1$ at% or 0.01-0.5 at% relative to the amount of Nb.

When M(III) and/or M(II) are restricted to preferred elements the optional additional element may include the alternative M(III) and/or M(II) elements. For example, when M(III) is Cr and M(II) is Zn the at least one additional element may be further selected from Al, Ga, Cu, Mg, and mixtures thereof.

Alternatively, the cations in the mixed-phase oxide may consist of Nb, Ti, M(III) and/or M(II); or consist of Nb, Ti, M(III) and M(II).

It will be understood that the mixed-phase oxide may further comprise Li and/or Na, which may reversibly intercalate in situ when the oxide acts as an active electrode material in a metal-ion battery.

Advantageously, it has been found that the mixed-phase oxide can be formed by a straightforward solid-state synthetic method, as shown by the present examples. Moreover, the improved properties provided by the interpenetrating mixture of the first phase and the second phase are provided without the requirement for particle-level engineering, e.g. without the requirement to form core/shell structures which might typically require a complex synthesis. Accordingly, preferably the interpenetrating mixture of the first phase and the second phase does not form a core/shell structure. For example, the interpenetrating mixture of the first phase and the second phase does not form a structure where the first phase forms a shell part and the second phase forms a core part surrounded by the shell part.

The mixed-phase oxide is preferably in particulate form. The mixed-phase oxide may have a $D_{50}$ particle diameter in the range of 0.1-100 $\mu$m, or 0.5-50 $\mu$m, or 1-20 $\mu$m. These particle sizes are advantageous because they are easy to process and fabricate into electrodes. Moreover, these particle sizes avoid the need to use complex and/or expensive methods for providing nanosized particles. Nanosized particles (e.g. particles having a $D_{50}$ particle diameter of 100 nm or less) are typically more complex to synthesise and require additional safety considerations.

The mixed-phase oxide may have a $D_{10}$ particle diameter of at least 0.05 $\mu$m, or at least 0.1 $\mu$m, or at least 0.5 $\mu$m, or at least 1 $\mu$m. By maintaining a $D_{10}$ particle diameter within these ranges, the potential for parasitic reactions in a Li ion cell is reduced from having reduced surface area, and it is easier to process with less binder in the electrode slurry.

The mixed-phase oxide may have a $D_{90}$ particle diameter of no more than 200 $\mu$m, no more than 100 $\mu$m, no more than 50 $\mu$m, or no more than 20 $\mu$m. By maintaining a $D_{90}$ particle diameter within these ranges, the proportion of the particle size distribution with large particle sizes is minimised, making the material easier to manufacture into a homogenous electrode.

The term "particle diameter" refers to the equivalent spherical diameter (esd), i.e. the diameter of a sphere having the same volume as a given particle, where the particle volume is understood to include the volume of any intra-particle pores. The terms "$D_n$" and "$D_n$ particle diameter" refer to the diameter below which n% by volume of the particle population is found, i.e. the terms "$D_{50}$" and "$D_{50}$ particle diameter" refer to the volume-based median particle diameter below which 50% by volume of the particle population is found. Where a material comprises primary crystallites agglomerated into secondary particles, it will be understood that the particle diameter refers to the diameter of the secondary particles. Particle diameters can be determined by laser diffraction. Particle diameters can be determined in accordance with ISO 13320:2009, for example using Mie theory.

The mixed-phase oxide may have a BET surface area in the range of 0.1-100 m$^2$/g, or 0.25-50 m$^2$/g, or 0.5-20 m$^2$/g. In general, a low BET surface area is preferred in order to minimise the reaction of the mixed-phase oxide with the electrolyte, e.g. minimising the formation of solid electrolyte interphase (SEI) layers during the first charge-discharge cycle of an electrode comprising the material. However, a BET surface area which is too low results in unacceptably low charging rate and capacity due to the inaccessibility of the bulk of the mixed-phase oxide to metal ions in the surrounding electrolyte.

The term "BET surface area" refers to the surface area per unit mass calculated from a measurement of the physical adsorption of gas molecules on a solid surface, using the Brunauer-Emmett-Teller theory. For example, BET surface areas can be determined in accordance with ISO 9277:2010.

The mixed-phase oxide may have a crystallite size of greater than 180 nm, or greater than 200 nm, or greater than 225 nm, or preferably greater than 250 nm. The crystallite size may be in the range of 180 nm - 20 $\mu$m, or 200 nm - 10 $\mu$m, or 225 nm - 5 $\mu$m, or 250 nm - 3 $\mu$m. These crystallite size ranges are believed to improve ion transport compared to materials with smaller crystallites because there are fewer grain boundaries within the material and therefore less interfacial resistance. Denser particles and higher density electrodes can also be produced with larger crystallite sizes. The crystallite size may be conveniently measured by the Scherrer method using a crushed Si crystal as a standard.

In powder X-ray diffraction patterns, the shape of the diffracted peaks is determined by a convolution of a line profile produced by the optics of the diffractometer (instrumental contribution) and one produced by the sample (sample dependent peak broadening). The finite size of the diffracting crystallites in the sample contributes to the width of the diffraction peaks. The instrumental contribution can be accounted for, then by using the Scherrer equation, the diffraction peak width can be used to determine the volume weighted mean crystallite diameter. The Scherrer equation correlates the width of a diffraction peak at a given Bragg angle to a minimum crystallite diameter.

$$Volume\ weighted\ average\ crystallite\ diameter\ (nm) = \frac{K\lambda}{\beta cos\theta}$$

$$\beta = \sqrt{\beta_{sample}^2 - \beta_{standard}^2}$$

Where K is a Scherrer constant, the value of which is 0.9 in this case. A is the wavelength of the X-rays, $\beta$ is the corrected peak width calculated from $\beta_{sample}$, $\beta_{standard}$, which are measured from the full width at half maximum of the chosen diffraction peaks in the sample being investigated and in the standard sample respectively, and $\theta$ is the Bragg angle of the sample peak being investigated.

Preferably, the Scherrer method is used to determine the volume weighted mean crystallite size of a sample, where the instrumental contribution can be determined from measurement of a standard sample. The standard sample should be a crystalline material with large crystallite sizes, e.g. mean crystallite size > 1 $\mu$m, ideally possessing Bragg peaks at the same angles as the peaks chosen for analysis in the test sample. $LaB_6$ (e.g. NIST SRM 660C) or a crushed Si crystal (e.g. NIST SRM 640C) are often used. The sample peak selected for analysis should be a single Bragg reflection, and preferably the peak with the highest scattering intensity. The full width at half maximum of the peak is measured by finding the points in the diffraction peak where the scattering intensity is half-way between the background intensity and the maximum intensity of the peak and measuring the difference in the $2\theta$ Bragg angle values of the peak at these scattering intensity values.

Preferably, the standard and test samples should be measured using the same conditions on the same instrument. The scan speed and step size of the diffraction measurement should be such that the peaks intended for investigation contain at least 8 data point measurements above the half-maximum point, and that the maximum intensity point in the peak has at least $10\times$ the intensity of the background.

Transmission electron microscope (TEM) examination may additionally be used to confirm the crystallite size determined by the Scherrer method. Particles of an overall size close to the $D_{50}$ diameter measured in the particle size distribution are examined by Selected Area Electron Diffraction (SAED) to investigate the extent of the crystalline domains within the particles. When a zone axis has been aligned and a clear diffraction pattern has been obtained a spatial map can be produced by measuring diffraction patterns at spatial intervals until a grain boundary is encountered.

The mixed-phase oxide may be coated with carbon, e.g. to improve its surface electronic conductivity and/or to prevent reactions with electrolyte.

The mixed-phase oxide may have a protective coating; optionally the protective coating comprises niobium oxide, aluminium oxide, zirconium oxide, organic or inorganic fluorides, organic or inorganic phosphates, titanium oxide, lithiated versions thereof, and mixtures thereof.

The electrode of the second aspect is typically of the form of an electrode composition in electrical contact with a current collector, where the electrode composition comprises the mixed-phase oxide. A current collector is typically a metal foil, e.g. copper or aluminium foil.

Optionally, the mixed-phase oxide forms at least 25 wt.%, 50 wt.%, or 75 wt.% of the total active electrode material in the electrode. The mixed-phase oxide may form the sole active electrode material in the electrode.

The electrode composition may further comprise at least one other component selected from a binder, a conductive additive, a different active electrode material (e.g. a further mixed-phase oxide as defined herein), and mixtures thereof. For instance, one electrode composition comprises about 92 wt% mixed-phase oxide, about 5 wt% conductive additive (e.g. carbon black), and about 3 wt% binder (e.g. poly(vinyldifluoride)), based on the total dry weight of the electrode composition.

Examples of suitable binders include polyvinylidene fluoride and its copolymers (PVDF), polytetrafluoroethylene (PTFE) and its copolymers, polyacrylonitrile (PAN), poly(methyl)methacrylate or poly(butyl)methacrylate, polyvinyl chloride (PVC), polyvinyl fomal, polyetheramide, polymethacrylic acid, polyacrylamide, polyitaconic acid, polystyrene sulfonic acid, polyacrylic acid (PAA) and alkali metal salts thereof, modified polyacrylic acid (mPAA) and alkali metal salts thereof, cellulose-based polymers, carboxymethylcellulose (CMC), modified carboxymethylcellulose (mCMC), sodium carboxymethylcellulose (Na-CMC), polyvinylalcohol (PVA), alginates and alkali metal salts thereof, butadieneacrylonitrile rubber (NBR), hydrogenated form of NBR (HNBR), styrene-butadiene rubber (SBR) and polyimide. The binder may be present in the electrode composition at 0-30 wt%, or 0.1-10 wt%, or 0.1-5 wt%, based on the total dry weight of the electrode composition.

Conductive additives are preferably non-active materials which are included so as to improve electrical conductivity between the active electrode material and between the active electrode material and the current collector. The conductive additives may suitably be selected from graphite, carbon black, carbon fibers, vapor-grown carbon fibres (VGCF), carbon nanotubes, graphene, acetylene black, ketjen black, metal fibers, metal powders and conductive metal oxides. Preferred conductive additives include carbon black and carbon nanotubes. Conductive additives may be present in the electrode composition at 0-20 wt%, 0.1-10 wt%, or 0.1-5 wt%, based on the total dry weight of the electrode composition.

The mixed-phase oxide may be present in the electrode composition at 100-50 wt%, 99.8-80 wt%, or 99.8-90 wt%, based on the total dry weight of the electrode composition. When the active electrode material is present at 100 wt.% of the electrode composition it may be used as a solid-state electrode.

When a different active electrode material is present in addition to the mixed-phase oxide, it may be selected from lithium titanium oxide, titanium niobium oxide, a different mixed-phase oxide, graphite, hard carbon, soft carbon, silicon, doped versions thereof, and mixtures thereof.

The mixed-phase oxide may be in combination with a lithium titanium oxide to form an active electrode material.

The lithium titanium oxide preferably has a spinel or ramsdellite crystal structure, e.g. as determined by X-ray diffraction. An example of a lithium titanium oxide having a spinel crystal structure is $Li_4Ti_5O_{12}$. An example of a lithium titanium oxide having a ramsdellite crystal structure is $Li_2Ti_3O_7$. These materials have been shown to have good properties for use as active electrode materials. Therefore, the lithium titanium oxide may have a crystal structure as determined by X-ray diffraction corresponding to $Li_4Ti_5O_{12}$ and/or $Li_2Ti_3O_7$. The lithium titanium oxide may be selected from $Li_4Ti_5O_{l2}$, $Li_2Ti_3O_7$, and mixtures thereof. The lithium titanium oxide may be doped with additional cations or anions. The lithium titanium oxide may be oxygen deficient. The lithium titanium oxide may comprise a coating, optionally wherein the coating is selected from carbon, polymers, metals, metal oxides, metalloids, phosphates, and fluorides.

The lithium titanium oxide may be synthesised by conventional ceramic techniques, for example solid-state synthesis or sol-gel synthesis. Alternatively, the lithium titanium oxide may be obtained from a commercial supplier.

The lithium titanium oxide is preferably in particulate form. The lithium titanium oxide may have a $D_{50}$ particle diameter in the range of 0.1-50 $\mu$m, or 0.25-20 $\mu$m, or 0.5-15 $\mu$m. The lithium titanium oxide may have a $D_{10}$ particle diameter of at least 0.01 $\mu$m, or at least 0.1 $\mu$m, or at least 0.5 $\mu$m. The lithium titanium oxide may have a $D_{90}$ particle diameter of no more than 100 $\mu$m, no more than 50 $\mu$m, or no more than 25 $\mu$m. By maintaining a $D_{90}$ particle diameter in this range the packing of lithium titanium oxide particles in the mixture with mixed-phase oxide particles is improved.

Lithium titanium oxides are typically used in battery anodes at small particle sizes due to the low electronic conductivity of the material. In contrast, the mixed-phase oxide as defined herein may be used at larger particle sizes since it typically has a higher lithium ion diffusion coefficient than lithium titanium oxide. Advantageously, in the composition the lithium titanium oxide may have a smaller particle size than the mixed-phase oxide, for example such that the ratio of the $D_{50}$ particle diameter of the lithium titanium oxide to the $D_{50}$ particle diameter of the mixed-phase oxide is in the range of 0.01:1 to 0.9:1, or 0.1:1 to 0.7:1. In this way, the smaller lithium titanium oxide particles may be accommodated in the voids between the larger mixed-phase oxide particles, increasing the packing efficiency of the composition.

The lithium titanium oxide may have a BET surface area in the range of 0.1-100 $m^2$/g, or 1-50 $m^2$/g, or 3-30 $m^2$/g.

The ratio by mass of the lithium titanium oxide to the mixed-phase oxide may be in the range of 0.5 : 99.5 to 99.5 : 0.5, preferably in the range of 2 : 98 to 98 : 2. In one implementation the active electrode material comprises a higher proportion of the lithium titanium oxide than the mixed-phase oxide, e.g. the ratio by mass of at least 2:1, at least 5:1, or at least 8:1. Advantageously, this allows the mixed-phase oxide to be incrementally introduced into existing electrodes based on lithium titanium oxides without requiring a large change in manufacturing techniques, providing an efficient way of improving the properties of existing electrodes. In another implementation the active electrode material has a higher proportion of the mixed-phase oxide than the lithium titanium oxide, e.g. such that the ratio by mass of the lithium titanium oxide to the mixed-phase oxide is less than 1:2, or less than 1:5, or less than 1:8. Advantageously, this allows for the cost of the active electrode material to be reduced by replacing some of the mixed-phase oxide with lithium titanium oxide.

The mixed-phase oxide may be in combination with a niobium oxide to form an active electrode material. The niobium oxide may be selected from $Nb_{12}O_{29}$, $NbO_2$, $NbO$, and $Nb_2O_5$. Preferably, the niobium oxide is $Nb_2O_5$.

The niobium oxide may be doped with additional cations or anions, for example provided that the crystal structure of the niobium oxide corresponds to the crystal structure of an oxide consisting of Nb and O, e.g. $Nb_{12}O_{29}$, $NbO_2$, $NbO$, and $Nb_2O_5$. The niobium oxide may be oxygen deficient. The niobium oxide may comprise a coating, optionally wherein the coating is selected from carbon, polymers, metals, metal oxides, metalloids, phosphates, and fluorides.

The niobium oxide may have the crystal structure of $Nb_{12}O_{29}$, $NbO_2$, $NbO$, or $Nb_2O_5$ as determined by X-ray diffraction. For example, the niobium oxide may have the crystal structure of orthorhombic $Nb_2O_5$ or the crystal structure of monoclinic $Nb_2O_5$. Preferably, the niobium oxide has the crystal structure of monoclinic $Nb_2O_5$, most preferably the crystal

structure of H-$Nb_2O_5$. Further information on crystal structures of $Nb_2O_5$ may be found at Griffith et al., J. Am. Chem. Soc. 2016, 138, 28, 8888-8899.

The niobium oxide may be synthesised by conventional ceramic techniques, for example solid-state synthesis or sol-gel synthesis. Alternatively, the niobium oxide may be obtained from a commercial supplier.

The niobium oxide is preferably in particulate form. The niobium oxide may have a $D_{50}$ particle diameter in the range of 0.1-100 $\mu$m, or 0.5-50 $\mu$m, or 1-20 $\mu$m. The niobium oxide may have a $D_{10}$ particle diameter of at least 0.05 $\mu$m, or at least 0.5 $\mu$m, or at least 1 $\mu$m. The niobium oxide may have a $D_{90}$ particle diameter of no more than 100 $\mu$m, no more than 50 $\mu$m, or no more than 25 $\mu$m. By maintaining a $D_{90}$ particle diameter in this range the packing of niobium oxide particles in the mixture with mixed-phase oxide particles is improved.

The niobium oxide may have a BET surface area in the range of 0.1-100 $m^2$/g, or 1-50 $m^2$/g, or 1-20 $m^2$/g. The ratio by mass of the niobium oxide to the mixed-phase oxide may be in the range of 0.5 : 99.5 to 99.5 : 0.5, or in the range of 2 : 98 to 98 : 2, or preferably in the range of 15 : 85 to 35 : 55.

A further implementation of the invention is an electrochemical device comprising an anode, a cathode, and an electrolyte disposed between the anode and the cathode, wherein the anode comprises a mixed-phase oxide according to the first aspect of the invention; optionally wherein the electrochemical device is metal-ion battery such as a lithium-ion battery or a sodium-ion battery. Preferably, the electrochemical device is a lithium-ion battery having a reversible anode active material specific capacity of greater than 230 mAh/g at 23 mA/g, wherein the battery can be charged and discharged at current densities relative to the anode active material of 200 mA/g or more, or 1000 mA/g or more, or 2000 mA/g or more, or 4000 mA/g or more whilst retaining greater than 70% of the initial cell capacity at 23 mA/g. It has been found that use of the active electrode materials of the first aspect of the invention can enable the production of a lithium-ion battery with this combination of properties, representing a lithium-ion battery that is particularly suitable for use in applications where high charge and discharge current densities are desired. Notably, the examples have shown that active electrode materials according to the first aspect of the invention have excellent capacity at high C-rates.

The mixed-phase oxide may be synthesised by conventional ceramic techniques. For example, it may be made by one or more of solid-state synthesis or sol-gel synthesis, preferably solid-state synthesis using particulate precursors as shown by the examples. The mixed-phase oxide may additionally be synthesised by one or more of alternative techniques commonly used, such as hydrothermal or microwave hydrothermal synthesis, solvothermal or microwave solvothermal synthesis, coprecipitation synthesis, spark or microwave plasma synthesis, combustion synthesis, electrospinning, spray pyrolysis, chemical vapour deposition, atomic layer deposition, and mechanical alloying.

The mixed-phase oxide may be provided by a method comprising steps of: providing one or more precursor materials; mixing said precursor materials to form a precursor material mixture; and heat treating the precursor material mixture in a temperature range from 800 °C - 1350 °C or 1000 - 1300 °C, thereby providing the mixed-phase oxide.

The mixed-phase oxide may be modified to comprise at least one electronegative element, partially replacing the oxygen anions with alternative anions selected from F, Cl, Br, I, N, S, Se, and mixtures thereof; or F, Cl, N, S, and mixtures thereof; or preferably F, N, and mixtures thereof. The at least one electronegative element may be present in a total amount of $\leq 5$ at% or $\leq 1$ at% relative to the amount of O. The electronegative element may be introduced by a method of mixing the mixed-phase oxide with a precursor comprising the electronegative element to provide a further precursor material mixture; and heat treating the further precursor material mixture in a temperature range from 300 - 1200 °C or 800 - 1100 °C optionally under reducing conditions, thereby providing the mixed-phase oxide comprising the additional electronegative element.

For example, to provide a mixed-phase oxide comprising N, the method may further comprise the steps of: mixing the mixed-phase oxide with a precursor comprising N (for example melamine or urea) to provide a further precursor material mixture; and heat treating the further precursor material mixture in a temperature range from 300 - 1200 °C under reducing conditions (for example under $N_2$), thereby providing the mixed-phase oxide comprising N.

For example, to provide a mixed-phase oxide comprising F, the method may further comprise the steps of: mixing the mixed-phase oxide with a precursor comprising F (for example polyvinylidene fluoride or $NH_4F$) to provide a further precursor material mixture; and heat treating the further precursor material mixture in a temperature range from 300 - 1200 °C under oxidising conditions (for example in air), thereby providing the mixed-phase oxide comprising F.

The method may comprise the further step of heat treating the mixed-phase oxide in a temperature range from 400 - 1350 °C or 800 - 1250 °C under reducing conditions, thereby inducing oxygen vacancies in the mixed-phase oxide.

The precursor materials for making the mixed-phase oxide may include one or more metal oxides, metal hydroxides, metal salts or ammonium salts. For example, the precursor materials may include one or more metal oxides or metal salts of different oxidation states and/or of different crystal structure. Examples of suitable precursor materials include but are not limited to: $Nb_2O_5$, $Nb(OH)_5$, Niobic Acid, $NbO_2$, Ammonium Niobate Oxalate, $NH_4H_2PO_4$, $(NH_4)_2PO_4$, $(NH_4)_3PO_4$, $P_2O_5$, $H_3PO_3$, $Ta_2O_5$, $WO_3$, $ZrO_2$, $TiO_2$, $MoO_3$, $V_2O_5$, $ZrO_2$, CuO, ZnO, $Al_2O_3$, $K_2O$, KOH, CaO, $GeO_2$, $Ga_2O_3$, $SnO_2$, CoO, $CO_2O_3$, $Fe_2O_3$, $Fe_3O_4$, $Cr_2O_3$, MnO, $MnO_2$, NiO, $Ni_2O_3$, $H_3BO_3$, ZnO, $Li_2CO_3$, $Na_2CO_3$, $H_3BO_3$, NiO, $Mg_5(CO_3)_4(OH)_2.5H_2O$, and MgO. The precursor materials may not comprise a metal oxide, or may comprise ion sources other than oxides. For example, the precursor materials may comprise metal salts (e.g. $NO_3^-$, $SO_3^-$) or other compounds

(e.g. oxalates, carbonates). For the substitution of the oxygen anion with other electronegative anions, the precursors may include one or more organic compounds, polymers, inorganic salts, organic salts, gases, or ammonium salts; examples include but are not limited to: melamine, $NH_4HCO_3$, $NH_3$, $NH_4F$, PVDF, PTFE, $NH_4Cl$, $NH_4Br$, $NH_4I$, $Br_2$, $Cl_2$, $I_2$, ammonium oxychloride amide, and hexamethylenetetramine.

Some or all of the precursor materials may be particulate materials. Where they are particulate materials, preferably they have a $D_{50}$ particle diameter of less than 20 $\mu$m in diameter, for example from 250 nm to 20 $\mu$m. Providing particulate materials with such a particle diameter can help to promote more intimate mixing of precursor materials, thereby resulting in more efficient solid-state reaction during the heat treatment step. However, it is not essential that the precursor materials have an initial particle size of <20 $\mu$m in diameter, as the particle size of the one or more precursor materials may be mechanically reduced during the step of mixing said precursor materials to form a precursor material mixture.

The step of mixing the precursor materials to form a precursor material mixture and/or further precursor material mixture may be performed by a process selected from: dry or wet/solvated planetary ball milling, rolling ball milling, high energy ball milling, bead milling, pin milling, a classification step, high shear milling, air jet milling, steam jet milling, planetary mixing, high shear mixing, impact mixing, powder blending, and/or impact milling. The force used for mixing/-milling may depend on the morphology of the precursor materials. For example, where some or all of the precursor materials have larger particle sizes (e.g. a $D_{50}$ particle diameter of greater than 20 $\mu$m), the milling force may be selected to reduce the particle diameter of the precursor materials such that the such that the particle diameter of the precursor material mixture is reduced to 20 $\mu$m in diameter or lower. When the particle diameter of particles in the precursor material mixture is 20 $\mu$m or less, this can promote a more efficient solid-state reaction of the precursor materials in the precursor material mixture during the heat treatment step. The solid-state synthesis may also be undertaken in pellets formed at high pressure (>10 MPa) from the precursor powders.

The step of heat treating the precursor material mixture and/or the further precursor material mixture may be performed for a time of from 1 hour to 24 hours, more preferably from 3 hours to 18 hours. For example, the heat treatment step may be performed for 1 hour or more, 2 hours or more, 3 hours or more, 6 hours or more, or 12 hours or more. The heat treatment step may be performed for 24 hours or less, 18 hours or less, 16 hours or less, or 12 hours or less.

The step of heat treating the precursor material mixture may be performed in a gaseous atmosphere, preferably air. Suitable gaseous atmospheres include: air, $N_2$, Ar, He, $CO_2$, CO, $O_2$, $H_2$, $NH_3$ and mixtures thereof. The gaseous atmosphere may be a reducing atmosphere. Where it is desired to make an oxygen-deficient material, preferably the step of heat treating the precursor material mixture is performed in an inert or reducing atmosphere.

The step of heat treating the further precursor material mixture may be performed under reducing conditions. Reducing conditions include under an inert gas such as nitrogen, helium, argon; or under a mixture of an inert gas and hydrogen; or under vacuum. Preferably, the step of heat treating the further precursor material mixture comprises heating under inert gas.

The further step of heat treating the mixed-phase oxide and/or the mixed-phase oxide comprising additional electronegative anions optionally under reducing conditions may be performed for a time of from 0.5 hour to 24 hours, more preferably from 2 hours to 18 hours. For example, the heat treatment step may be performed for 0.5 hour or more, 1 hours or more, 3 hours or more, 6 hours or more, or 12 hours or more. The further step heat treating may be performed for 24 hours or less, 18 hours or less, 16 hours or less, or 12 hours or less. Reducing conditions include under an inert gas such as nitrogen, helium, argon; or under a mixture of an inert gas and hydrogen; or under vacuum. Preferably heating under reducing conditions comprises heating under inert gas.

In some methods it may be beneficial to perform a two-step heat treatment. For example, the precursor material mixture and/or the further precursor material mixture may be heated at a first temperature for a first length of time, follow by heating at a second temperature for a second length of time. Preferably the second temperature is higher than the first temperature. Performing such a two-step heat treatment may assist the solid-state reaction to form the desired crystal structures. This may be carried out in sequence or may be carried out with an intermediate re-grinding step.

The method may include one or more post-processing steps after formation of the mixed-phase oxide. In some cases, the method may include a post-processing step of heat treating the mixed-phase oxide, sometimes referred to as 'annealing'. This post-processing heat treatment step may be performed in a different gaseous atmosphere to the step of heat treating the precursor material mixture to form the mixed-phase oxide. The post-processing heat treatment step may be performed in an inert or reducing gaseous atmosphere. Such a post-processing heat treatment step may be performed at temperatures of above 500 °C, for example at about 900 °C. Inclusion of a post-processing heat treatment step may be beneficial to e.g. form deficiencies or defects in the mixed-phase oxide, for example to induce oxygen deficiency; or to carry out anion exchange on the formed mixed-phase oxide e.g. N exchange for the O anion.

The method may include a step of milling and/or classifying the mixed-phase oxide (e.g. impact milling, jet milling, steam jet milling, high energy milling, ball milling, high shear milling, pin milling, air classification, wheel classification, sieving, cyclonic separation, bead milling) to provide a material with any of the particle size parameters given above.

The invention provides a method of making an electrode, the method comprising providing a mixed-phase oxide as defined herein; and depositing the mixed-phase oxide onto a current collector, thereby forming the electrode. Providing the mixed-phase oxide may include synthesising the mixed-phase oxide by the methods provided herein. The depositing step may include forming a slurry of the mixed-phase oxide and a solvent. The slurry may comprise at least one other component selected from a binder, a conductive additive, a different active electrode material, and mixtures thereof. The slurry may be deposited onto a current collector and the solvent removed, thereby forming an electrode layer on the current collector. Further steps, such as heat treatment to cure any binders and/or calendaring of the electrode layer may be carried out as appropriate. For example, the solvent may be removed by drying e.g. at temperatures of 30-100°C. The electrode may be calendared to a density of 2-3.5 or 2.6-2.9 g cm$^{-3}$. The electrode layer may have a thickness in the range of from 5 $\mu$m to 2 mm, preferably 5 $\mu$m to 1 mm, preferably 5 $\mu$m to 500 $\mu$m, preferably 5 $\mu$m to 200 $\mu$m, preferably 5 $\mu$m to 100 $\mu$m, preferably 5 $\mu$m to 50 $\mu$m.

Alternatively, the slurry may be formed into a freestanding film or mat comprising the mixed-phase oxide, for instance by casting the slurry onto a suitable casting template, removing the solvent and then removing the casting template. The resulting film or mat is in the form of a cohesive, freestanding mass which may then be bonded to a current collector by known methods.

**Examples**

The mixed-phase oxides were synthesised by a solid-state route. In the first step, the precursor materials ($Nb_2O_5$, $TiO_2$, $ZnO$, $Cr_2O_3$, $CuO$, $MgO$, $Al_2O_3$, and $Ga_2O_3$) were milled to a $D_{50}$ particle diameter below 20 $\mu$m. Appropriate amounts of the precursors were subsequently combined and mixed with an impact mill at 20,000 rpm to achieve a homogeneous powder mixture (50 g total). The resulting powders were heat treated in an alumina crucible using a muffle furnace between 1100 - 1200 °C for 1 - 24 h, depending on the desired Wadsley-Roth phases. Samples 3-12 were removed from the furnace, impacted milled at 20,000 rpm, and heated for a second time using the same conditions. A heating rate of 5 °C/min was used for all heat treatment conditions. Finally, a de-agglomeration step was utilised by impact milling at 20,000 rpm for at least 2 minutes, to adjust the desired particle size distribution where necessary. Particle Size Distributions were obtained with a Horiba laser diffraction particle analyser for dry powder. Air pressure was kept at 0.3 MPa. The results are set out in Table 1.

Table 1: A summary of the materials synthesised. Particle size distributions were obtained with a Horiba laser diffraction particle analyser for dry powder with air pressure at 0.3 MPa.

| Sample | Material | Synthesis conditions | $D_{10}$ / $\mu$m | $D_{50}$ / $\mu$m | $D_{90}$ / $\mu$m |
|---|---|---|---|---|---|
| 1* | $TiNb_2O_7$ | 1200°C 12h | 2.1 | 4.8 | 10.8 |
| 2* | $Cr_{0.6}Zn_{1.6}Nb_{33.8}O_{87}$ | 1100°C 12h | 3.3 | 5.3 | 8.2 |
| 3 | $95TiNb_2O_7{:}5Cr_{0.6}Zn_{1.6}Nb_{33.8}O_{87}$ | 1150°C 12h $\times$2 | 2.9 | 5.1 | 8.9 |
| 4 | $90TiNb_2O_7{:}10Cr_{0.6}Zn_{1.6}Nb_{33.8}O_{87}$ | 1125°C 12h $\times$2 | 1.2 | 4.1 | 7.2 |
| 5 | $75TiNb_2O_7{:}25Cr_{0.6}Zn_{1.6}Nb_{33.8}O_{87}$ | 1150°C 12h $\times$2 | 1.8 | 5.1 | 8.4 |
| 6 | $90TiNb_2O_7{:}10Al_{1.2}Zn_{0.8}Nb_{34}O_{87.6}$ | 1110°C 12h $\times$2 | 0.7 | 4.5 | 12.9 |
| 7 | $90TiNb_2O_7{:}10Cr_3Nb_{33}O_{87}$ | 1110°C 12h $\times$2 | 2.7 | 5.2 | 9.6 |
| 8 | $90TiNb_2O_7{:}10Cr_{1.5}Al_{1.5}Nb_{33}O_{87}$ | 1110°C 12h $\times$2 | 1.8 | 3.9 | 7.7 |
| 9 | $90TiNb_2O_7{:}10Ga_{1.5}Al_{1.5}Nb_{33}O_{29}$ | 1100°C 12h $\times$2 | 3.0 | 5.4 | 9.0 |
| 10 | $90TiNb_2O_7{:}10CuGa_{0.67}Nb_{34}O_{87}$ | 1100°C 12h $\times$2 | 0.2 | 4.5 | 8.4 |
| 11 | $90TiNb_2O_7{:}10Zn_2Nb_{34}O_{87}$ | 1100°C 12h $\times$2 | 2.9 | 7.2 | 16.6 |
| 12 | $90TiNb_2O_7{:}10MgCr_{0.67}Nb_{34}O_{87}$ | 1100°C 12h $\times$2 | 2.9 | 5.3 | 9.0 |

* reference samples

The nomenclature e.g. $95TiNb_2O_7{:}5Cr_{0.6}Zn_{1.6}Nb_{33.8}O_{87}$ refers to a mixed-phase oxide made from precursors weighed to provide elemental ratios of a mixture of 95 parts by weight $TiNb_2O_7$ and 5 parts by weight $Cr_{0.6}Zn_{1.6}Nb_{33.8}O_{87}$. The first and second phases in the synthesised mixed-phase oxide will contain additional substituting elements compared to the 'base' oxides. Specifically:

in Samples 3-5 the first phase has the crystal structure of $TiNb_2O_7$ but further contains Cr and/or Zn and the second phase has the crystal structure of $Zn_2Nb_{34}O_{87}$ but further contains Cr and/or Ti;
in Sample 6 the first phase has the crystal structure of $TiNb_2O_7$ but further contains Al and/or Zn and the second phase has the crystal structure of $Zn_2Nb_{34}O_{87}$ but further contains Al and/or Ti;
in Sample 7 the first phase has the crystal structure of $TiNb_2O_7$ but further contains Cr and the second phase has the

crystal structure of $Zn_2Nb_{34}O_{87}$ but contains Cr and/or Ti;

in Sample 8 the first phase has the crystal structure of $TiNb_2O_7$ but further contains Cr and/or Al and the second phase has the crystal structure of $Zn_2Nb_{34}O_{87}$ but contains Cr, Al, and/or Ti;

in Sample 9 the first phase has the crystal structure of $TiNb_2O_7$ but further contains Ga and/or Al and the second phase has the crystal structure of $Zn_2Nb_{34}O_{87}$ but contains Ga, Al, and/or Ti;

in Sample 10 the first phase has the crystal structure of $TiNb_2O_7$ but further contains Cu and/or Ga and the second phase has the crystal structure of $Zn_2Nb_{34}O_{87}$ but contains Cu, Ga, and/or Ti;

in Sample 11 the first phase has the crystal structure of $TiNb_2O_7$ but further contains Zn and the second phase has the crystal structure of $Zn_2Nb_{34}O_{87}$ but further contains Ti;

in Sample 12 the first phase has the crystal structure of $TiNb_2O_7$ but further contains Mg and/or Cr and the second phase has the crystal structure of $Zn_2Nb_{34}O_{87}$ but contains Mg, Cr, and/or Ti.

Table 2: A comparison of anatase peak intensity for samples measured with In-situ PXRD during synthesis. Anatase $TiO_2$ (101) peak was measured at 25.2° $2\theta$.

| Sample | Material | Intensity of anatase peak at measurement temperature | |
|---|---|---|---|
| | | 25°C | 1200°C |
| 1* | $TiNb_2O_7$ | 1.00 | 0.60 |
| 3 | $95TiNb_2O_7$: $5Cr_{0.6}Zn_{1.6}Nb_{33.8}O_{87}$ | 1.00 | 0 |
| 5 | $75TiNb_2O_7$: $25Cr_{0.6}Zn_{1.6}Nb_{33.8}O_{87}$ | 1.00 | 0 |
| 13* | $95TiNb_2O_7$: $5Ti_2Nb_{10}O_{29}$ | 1.00 | 0.51 |

* Reference samples

A synthesis advantage for the Examples herein has been shown over reference systems $TiNb_2O_7$ and $95TiNb_2O_7$:$5Ti_2Nb_{10}O_{29}$. These data were collected from a Rigaku SmartLab SE powder X-ray diffractometer using a variable temperature heating stage, where an unreacted sample is heated at a 6°C/min and XRD scans are taken every 2 minutes, to provide the results in Table 2. The synthesis of samples 3 and 5 reached completion at temperatures below 1200 °C, as shown by the absence of the anatase peak, but the synthesis of samples 1* and 13* did not. After heat treating samples 1* and 13* for 12 hours at 1200°C the synthesis of sample 13* reached completion but the synthesis of sample 1* did not. This is evidenced by a rutile $TiO_2$ (110) peak being present in the XRD pattern of sample 1*. These data indicate an improvement in the synthesis efficiency for samples in accordance with the invention, which facilitates more cost-effective manufacture.

## Materials Characterisation

The phase purity of samples was analysed using a Rigaku Miniflex powder X-ray diffractometer in $2\theta$ range (10-70°) at 1 °/min scan rate. Figure 1 shows the measured XRD diffraction patterns for Samples 1-8. Table 3 presents the crystal structure parameters obtained from refinement of the XRD pattern for each sample. The first phase having the crystal structure of $TiNb_2O_7$ was found to have peaks at the same locations (with some shift due to crystal modification, up to around 0.2°) matching the ICDD entry 00-039-1407 (space group I12/m1). The second phase having the crystal structure of $Zn_2Nb_{34}O_{87}$ was found to have peaks at the same locations (with some shift due to crystal modification, up to around 0.2°) matching ICDD database entry 00-013-0317 (space group A12/m1). Sample 2 was refined using a combination of both monoclinic (A12/m1) and orthorhombic (Amma - PDF card 04-021-7859) crystal structures. The second phase for the mixed-phase oxides was refined using the monoclinic crystal structure only. The peak shifts compared to the reference database entries of the 'base' crystal structures reflect the incorporation of the substituting elements with differing ionic radii (e.g. $TiNb_2O_7$ substituted with Cr and/or Zn and $Zn_2Nb_{34}O_{87}$ substituted with Cr and/or Ti). The ratio by mass of the first phase to the second phase resulting from the refinement was found to agree well with the ratio expected based on the amounts of the precursors, with minor differences again reflecting the expected substituting elements.

Sample 3 was subjected to TEM-EDX analysis. The analysis showed a homogenous distribution of the cations throughout the particles observed, with no localisation of cations to specific domains. This supports the presence of the interpenetrating mixture of the first phase and the second phase and the simultaneous substitution of the 'base' phases.

Table 3: A summary table of unit cell parameters for each sample calculated by Rietveld refinement of their powder XRD spectra with software TOPAS. RWP represents the goodness of fit and the accuracy of the Rietveld refinement. $I_B/I_A$ calculated from ratio of normalised peak height of characteristic peaks.

| Sample | First phase / wt% | Second phase / wt% | Rwp / % | $I_B/I_A$ |
|---|---|---|---|---|
| 1* | 100 (a = 17.688(1), b = 3.8026(2), c = 11.8975(6), β = 95.332(2)) | 0 | 14 | 0 |
| 2* | 0 | 100 (A12/m1 a = 15.599(1), b = 3.831(1), c = 20.647(1), β = 113.03(1)), (Amma a = 28.725(3), b = 3.829(1), c = 20.647(2) | 16 | 0 |
| 3 | 93 (a = 17.691(1), b = 3.8031(2), c = 11.9014(7), β = 95.332(4)) | 7 (a = 15.542(4), b = 3.810(1), c = 20.574(2), β = 113.21(2)) | 12 | 0.14 |
| 4 | 91 (a = 17.696(1), b = 3.8043(2), c = 11.9034(6), β = 95.337(3)) | 9 (a = 15.539(3), b = 3.813(1), c = 20.573(3), β = 113.14(2)) | 12 | 0.16 |
| 5 | 78 (a = 17.711(1), b = 3.8062(2), c = 11.9130(6), β = 95.327(3)) | 22 (a = 15.533(2), b = 3.813(1), c = 20.572(2), β = 113.07(1)) | 12 | 0.37 |
| 6 | 88 (a = 17.695(1), b = 3.8043(2), c = 11.9019(7), β = 95.329(3)) | 12 (a = 15.527(4), b = 3.815(1), c = 20.549(5), β = 113.02(3)) | 13 | 0.20 |
| 7 | 91 (a = 17.695(1), b = 3.8044(2), c = 11.9022(7), β = 95.326(4)) | 9 (a = 15.521(5), b = 3.815(1), c = 20.549(7), β = 113.07(3)) | 12 | 0.15 |
| 8 | 82 (a = 17.699(1), b = 3.8063(2), c = 11.9076(9), β = 95.329(4)) | 18 (a = 15.533(5), b = 3.816(1), c = 20.551(6), β = 113.03(3)) | 14 | 0.22 |
| 9 | 92 (a = 17.6821, b = 3.80251, c = 11.89564, β = 95.317) | 8 (a = 15.57435, b = 3.81519, c = 20.54311, β = 113.529) | 19 | 0.2 |
| 10 | 91 (a = 17.6823, b = 3.80336, c = 11.89572, β = 95.317) | 9 (a = 15.59314, b = 3.81612, c = 20.54402, β = 113.664) | 20 | 0.24 |
| 11 | 92 (a = 17.6908, b = 3.8037, c = 11.89966, β = 95.318) | 8 (a = 15.56891, b = 3.81584, c = 20.54067, β = 113.494) | 19 | 0.22 |
| 12 | 91 (a = 17.68268, b = 3.80281, c = 11.89529, β = 95.324) | 9 (a = 15.57181, b = 3.81536, c = 20.54463, β = 113.464) | 19 | 0.24 |

Table 4: A summary table of crystallite size for samples 3, 4, 8, and 12 calculated using the Scherrer equation using a crushed Si crystal as a standard.

| Sample | Full width at half-max of the highest diffraction peak / ° (error) | Si standard-corrected Scherrer crystallite size / nm |
|---|---|---|
| 3 | 0.0542 (6) | 266 |
| 4 | 0.0476 (5) | 453 |
| 8 | 0.0464 (9) | 547 |
| 12 | 0.0522 (7) | 298 |

## Electrochemical Characterisation

Li-ion cell charge rate is usually expressed as a "C-rate". A 1C charge rate means a charge current such that the cell is fully charged in 1 h, 10C charge means that the battery is fully charged in 1/10th of an hour (6 minutes). C-rate hereon is defined from the reversible capacity observed of the anode within the voltage limits applied in its second cycle de-lithiation, i.e. for an anode that exhibits 1.0 mAh cm$^{-2}$ capacity within the voltage limits of 1.1 - 3.0 V, a 1C rate corresponds to a current density applied of 1.0 mA cm$^{-2}$. In a typical material as described herein, this corresponds to ~250 mA/g of active material. Electrochemical tests were carried out in half-coin cells (CR2032 size) for analysis. In half-coin tests, the active material is tested in an electrode versus a Li metal electrode to assess its fundamental performance. In the below examples, the active material composition to be tested was combined with N-Methyl Pyrrolidone (NMP), carbon black (Super P) acting as a conductive additive, and poly(vinyldifluoride) (PVDF) binder and mixed to form a slurry using a lab-scale centrifugal planetary mixer. The non-NMP composition of the slurries was 92 wt% active material, 5 wt% conductive additive, 3 wt% binder. The slurry was coated on an Al foil current collector to the desired loading of 69 - 75 g m$^{-2}$ by doctor blade coating and dried by heating. The electrodes were then calendared to a density of 2.6 - 2.9 g cm$^{-3}$ at 80°C to achieve targeted porosities of 30-35%. Electrodes were punched out at the desired size and combined with a separator (Celgard porous PP/PE), Li metal, and electrolyte (1.3 M LiPF$_6$ in EC/DEC) inside a steel coin cell casing and sealed under pressure. Cycling was then carried out at 25°C at low current rates (C/10) for 2 full cycles of lithiation and de-lithiation between 1.1 - 3.0 V. Afterwards, the cells were tested for their performance at increasing current densities. During these tests, the cells were cycled asymmetric at 25°C, with a slow lithiation (C/5) followed by increasing de-lithiation rates (e.g. 5C, 10C) to provide the capacity. Data has been averaged from 3-5 cells prepared from the same electrode coating, with the error shown from the standard deviation. Accordingly, the data represent a robust study showing the improvements achieved by the materials according to the invention compared to prior materials. These data are shown in Table 5.

Table 5: A summary of electrochemical testing results from Li-ion half coin cells.

| Sample | Delithiation specific capacity 2$^{nd}$ C/10 cycle / mAh/g | Coulombic efficiency 1$^{st}$ cycle at C/10 / % | Delithiation specific capacity 5C / mAh/g | Delithiation specific capacity 10C / mAh/g |
|---|---|---|---|---|
| 1* | 245 $\pm$ 1 | 98.2 $\pm$ 0.4 | 215 $\pm$ 3 | 201 $\pm$ 4 |
| 2* | 207 $\pm$ 2 | 98.9 $\pm$ 0.3 | 199 $\pm$ 2 | 192 $\pm$ 2 |
| 3 | 248 $\pm$ 5 | 98.8 $\pm$ 0.3 | 231 $\pm$ 3 | 224 $\pm$ 4 |
| 4 | 238 $\pm$ 2 | 98.3 $\pm$ 0.1 | 223 $\pm$ 2 | 211 $\pm$ 2 |
| 5 | 232 $\pm$ 4 | 98.3 $\pm$ 0.0 | 217 $\pm$ 3 | 208 $\pm$ 2 |
| 6 | 248 $\pm$ 4 | 98.6 $\pm$ 0.1 | 235 $\pm$ 1 | 220 $\pm$ 4 |
| 7 | 237 $\pm$ 2 | 98.0 $\pm$ 0.2 | 222 $\pm$ 2 | 211 $\pm$ 3 |
| 8 | 240 $\pm$ 3 | 98.0 $\pm$ 0.2 | 224 $\pm$ 2 | 210 $\pm$ 3 |
| 9 | 237 $\pm$ 3 | 98.7 $\pm$ 0.1 | 223 $\pm$ 1 | 210 $\pm$ 3 |
| 10 | 238 $\pm$ 1 | 98.2 $\pm$ 0.0 | 219 $\pm$ 1 | 207 $\pm$ 3 |
| 11 | 234 $\pm$ 1 | 98.2 $\pm$ 0.0 | 222 $\pm$ 1 | 205 $\pm$ 2 |
| 12 | 240 $\pm$ 2 | 98.5 $\pm$ 0.0 | 220 $\pm$ 2 | 211 $\pm$ 2 |

## Discussion

The interpenetrating mixture of the first phase and the second phase and the simultaneous substitution of the 'base' phases was found to provide a surprising improvement in the properties of the mixed-phase oxide compared to either of the single phases. In particular, at high rates of 5C and above the delithiation specific capacity of Samples 3-5 (mixed-phase oxides containing Nb, Ti, Cr, and Zn) was found to be higher than both Sample 1* (TiNb$_2$O$_7$) and Sample 2* (Cr$_{0.6}$Zn$_{1.6}$Nb$_{33.8}$O$_{87}$), representing a synergistic improvement. Similarly, the delithiation specific capacity at 5C and above for each of Sample 6 (mixed-phase oxide containing Nb, Ti, Al, and Zn), Sample 7 (mixed-phase oxide containing Nb, Ti, and Cr), Sample 8 (mixed-phase oxide containing Nb, Ti, Cr, and Al), Sample 9 (mixed-phase oxide containing Nb, Ti, Ga, and Al), Sample 10 (mixed-phase oxide containing Nb, Ti, Cu, and Ga), Sample 11 (mixed-phase oxide containing Nb, Ti, and Zn), and Sample 12 (mixed-phase oxide containing Nb, Ti, Mg, and Cr) was found to be higher than both Sample 1* and Sample 2*.

It would be expected that similar advantages would be shown for the range of elements M(III) and M(II) described.

## Claims

1. A mixed-phase oxide for use as an active electrode material;

   wherein the mixed-phase oxide comprises Nb and Ti and further comprises M(III) and/or M(II); wherein M(III) is selected from Cr, Al, Ga, and mixtures thereof;
   M(II) is selected from Zn, Cu, Mg, and mixtures thereof;
   wherein the mixed-phase oxide comprises an interpenetrating mixture of a first phase and a second phase;

wherein the first phase has the crystal structure of $TiNb_2O_7$ and the second phase has the crystal structure of $Zn_2Nb_{34}O_{87}$.

2. The mixed-phase oxide of claim 1, wherein an XRD pattern of the mixed-phase oxide exhibits (i) a peak A attributed to the first phase at $2\theta = 26.0 \pm 0.1°$; and/or (ii) a peak B attributed to the second phase at $2\theta = 24.9 \pm 0.1°$, optionally wherein the ratio of the intensity $I_B$ of peak B to the intensity $I_A$ of peak A is $0 < I_B / I_A \leq 0.4$, or $0.01 \leq I_B / I_A \leq 0.25$, or $0.05 \leq I_B / I_A \leq 0.22$, or $0.07 \leq I_B / I_A \leq 0.16$.

3. The mixed-phase oxide of claim 1 or claim 2, wherein the weight ratio of the first phase to the second phase is 199:1 - 1:1, or 99:1 - 3:1, or 50:1 - 8:1.

4. The mixed-phase oxide of any preceding claim, wherein (i) the first phase forms at least 85 wt%, or at least 90 wt%, or at least 92 wt% of the mixed-phase oxide; and/or (ii) the first phase and the second phase form at least 80 wt%, at least 90 wt%, or at least 95 wt% of the mixed-phase oxide.

5. The mixed-phase oxide of any preceding claim, comprising 66-80 at% Nb, 33-17 at% Ti, and further comprising >0-1 at% M(III) and/or >0-2 at% M(II) relative to all cations.

6. The mixed-phase oxide of any preceding claim, wherein the combined amount of M(III) and M(II) is $\geq 0.05$ at% or $\geq 0.5$ at% or $\geq 0.6$ at% relative to the amount of Nb.

7. The mixed-phase oxide of any preceding claim, wherein the atomic ratio of Ti : Nb is at least 0.3 : 1, or at least 0.4 : 1, or 0.42 : 1 to 0.5 : 1.

8. The mixed-phase oxide of any preceding claim, wherein:

   (i) the mixed-phase oxide comprises M(III), or comprises M(III) and M(II); and/or
   (ii) M(III) is Cr, Al, and mixtures thereof and M(II) is Zn; and/or
   (iii) M(III) is Cr, Al, and mixtures thereof; or wherein M(III) is Cr; and/or
   (iv) M(II) is Zn, Cu, and mixtures thereof; or wherein M(II) is Zn; and/or
   (v) the mixed-phase oxide comprises M(III) and M(II), wherein M(III) is Cr and M(II) is Zn.

9. The mixed-phase oxide of any preceding claim, wherein the mixed-phase oxide:

   (i) is in particulate form, optionally wherein the mixed-phase oxide has a $D_{50}$ particle diameter in the range of 0.1-100 $\mu$m, or 0.5-50 $\mu$m, or 1-20 $\mu$m; and/or
   (ii) has a BET surface area in the range of 0.1-100 m$^2$/g, or 0.25-50 m$^2$/g, or 0.5-20 m$^2$/g; and/or
   (iii) has a crystallite size of greater than 180 nm, or greater than 200 nm, or greater than 225 nm, or greater than 250 nm.

10. The mixed-phase oxide of any preceding claim, further comprising at least one additional element; optionally wherein the additional element is selected from:

    (i) Zr, Hf, V, Fe, Ta, Mo, W, Mn, Co, Ni, Cd, B, Si, Sn, P, and mixtures thereof; or
    (ii) Zr, V, Fe, Mo, W, Mn, Co, Ni, Cd, B, Si, P, and mixtures thereof; or
    (iii) Zr, V, Fe, Mo, W, P, and mixtures thereof;

    optionally wherein the at least one additional element is present in a total amount of $\leq 5$ at% or $\leq 1$ at% or $\leq 0.5$ at% relative to the amount of Nb.

11. The mixed-phase oxide of any preceding claim, further comprising at least one electronegative element selected from:

    (i) F, Cl, Br, I, N, S, Se, and mixtures thereof; or
    (ii) F, Cl, N, S, and mixtures thereof; or
    (ii) F, N, and mixtures thereof;
    optionally wherein the at least one electronegative element is present in a total amount of $\leq 5$ at% or $\leq 1$ at% relative to the amount of O.

**12.** The mixed-phase oxide of any preceding claim, wherein the interpenetrating mixture of the first phase and the second phase does not form a core/shell structure.

**13.** A composition comprising the mixed-phase oxide of any of claims 1-12 and at least one other component; optionally wherein the at least one other component is selected from a binder, a solvent, a conductive additive, a different active electrode material, and mixtures thereof.

**14.** An electrode comprising the mixed-phase oxide of any of claims 1-12 as an active electrode material; optionally wherein the mixed-phase oxide forms at least 25 wt.%, at least 50 wt.%, or at least 75 wt% of the total active electrode material in the electrode; or wherein the mixed-phase oxide is the sole active electrode material in the electrode.

**15.** A metal-ion battery comprising the electrode of claim 14, optionally wherein metal-ion battery is a lithium-ion battery and the electrode forms the anode; and/or is a lithium-ion battery having a reversible anode active material specific capacity of greater than 230 mAh/g at 23 mA/g, wherein the battery can be charged and discharged at current densities relative to the anode active material of 230 mA/g or more, or 1000 mA/g or more, or 2000 mA/g or more, or 4000 mA/g or more whilst retaining greater than 70% of the initial cell capacity at 23 mA/g.

**Patentansprüche**

**1.** Mischphasenoxid zur Verwendung als aktives Elektrodenmaterial;

wobei das Mischphasenoxid Nb und Ti umfasst und ferner M(III) und/oder M(II) umfasst;
wobei M(III) ausgewählt ist aus Cr, Al, Ga und Gemischen davon;
M(II) ausgewählt ist aus Zn, Cu, Mg und Gemischen davon; wobei das Mischphasenoxid ein interpenetrierendes Gemisch aus einer ersten Phase und einer zweiten Phase umfasst;
wobei die erste Phase die Kristallstruktur von $TiNb_2O_7$ aufweist und die zweite Phase die Kristallstruktur von $Zn_2Nb_{34}O_{87}$ aufweist.

**2.** Mischphasenoxid nach Anspruch 1, wobei ein XRD-Muster des Mischphasenoxids aufweist: (i) einen der ersten Phase zugeordneten Peak A bei $2\theta = 26{,}0\pm0{,}1°$; und/oder (ii) einen der zweiten Phase zugeordneten Peak B bei $2\theta = 24{,}9\pm0{,}1°$, wobei gegebenenfalls das Verhältnis der Intensität $I_B$ von Peak B zu der Intensität $I_A$ von Peak A $0 < I_B/I_A \leq 0{,}4$ oder $0{,}01 \leq I_B/I_A \leq 0{,}25$ oder $0{,}05 \leq I_B/I_A \leq 0{,}22$ oder $0{,}07 \leq I_B/I_A \leq 0{,}16$ beträgt.

**3.** Mischphasenoxid nach Anspruch 1 oder Anspruch 2 , wobei das Gewichtsverhältnis der ersten Phase zu der zweiten Phase 199:1 - 1:1 oder 99:1 - 3:1 oder 50:1 - 8:1 beträgt.

**4.** Mischphasenoxid nach einem der vorstehenden Ansprüche, wobei (i) die erste Phase wenigstens 85 Gew.-% oder wenigstens 90 Gew.-% oder wenigstens 92 Gew.-% des Mischphasenoxids bildet; und/oder (ii) die erste Phase und die zweite Phase wenigstens 80 Gew.-%, wenigstens 90 Gew.-% oder wenigstens 95 Gew.-% des Mischphasenoxids bilden.

**5.** Mischphasenoxid nach einem der vorstehenden Ansprüche, umfassend 66-80 At.-% Nb, 33-17 At.-% Ti und ferner umfassend >0-1 At.-% M(III) und/oder >0-2 At.-% M(II) bezogen auf alle Kationen.

**6.** Mischphasenoxid nach einem der vorstehenden Ansprüche, wobei die kombinierte Menge von M(III) und M(II) $\geq 0{,}05$ At.-% oder $\geq 0{,}5$ At.-% oder $\geq 0{,}6$ At.-% bezogen auf die Menge an Nb beträgt.

**7.** Mischphasenoxid nach einem der vorstehenden Ansprüche, wobei das Atomverhältnis von Ti: Nb wenigstens 0,3: 1 oder wenigstens 0,4: 1 oder 0,42: 1 bis 0,5: 1 beträgt.

**8.** Mischphasenoxid nach einem der vorstehenden Ansprüche, wobei:

(i) das Mischphasenoxid M(III) umfasst oder M(III) und M(II) umfasst; und/oder
(ii) M(III) Cr, Al und Gemische davon ist und M(II) Zn ist; und/oder
(iii) M(III) Cr, Al und Gemische davon ist; oder wobei M(III) Cr ist; und/oder
(iv) M(II) Zn, Cu und Gemische davon ist; oder wobei M(II) Zn ist; und/oder
(v) das Mischphasenoxid M(III) und M(II) umfasst, wobei M(III) Cr ist und M(II) Zn ist.

9. Mischphasenoxid nach einem der vorstehenden Ansprüche, wobei das Mischphasenoxid:

   (i) in Partikelform vorliegt, wobei gegebenenfalls das Mischphasenoxid einen $D_{50}$-Partikeldurchmesser in dem Bereich von 0,1-100 $\mu$m oder 0,5-50 $\mu$m oder 1-20 $\mu$m aufweist; und/oder
   (ii) eine BET-Oberfläche in dem Bereich von 0,1-100 $m^2$/g oder 0,25-50 $m^2$/g oder 0,5-20 $m^2$/g aufweist; und/oder
   (iii) eine Kristallitgröße von größer als 180 nm oder größer als 200 nm oder größer als 225 nm oder größer als 250 nm aufweist.

10. Mischphasenoxid nach einem der vorstehenden Ansprüche, ferner umfassend wenigstens ein zusätzliches Element; wobei gegebenenfalls das zusätzliche Element ausgewählt ist aus:

   (i) Zr, Hf, V, Fe, Ta, Mo, W, Mn, Co, Ni, Cd, B, Si, Sn, P und Gemischen davon; oder
   (ii) Zr, V, Fe, Mo, W, Mn, Co, Ni, Cd, B, Si, P und Gemischen davon; oder
   (iii) Zr, V, Fe, Mo, W, P und Gemischen davon;

   wobei gegebenenfalls das wenigstens eine zusätzliche Element in einer Gesamtmenge von ≤ 5 At.-% oder ≤ 1 At.-% oder ≤ 0,5 At.-% bezogen auf die Menge an Nb vorhanden ist.

11. Mischphasenoxid nach einem der vorstehenden Ansprüche, ferner umfassend wenigstens ein elektronegatives Element ausgewählt aus:

   (i) F, Cl, Br, I, N, S, Se und Gemischen davon; oder
   (ii) F, Cl, N, S und Gemischen davon; oder
   (ii) F, N und Gemischen davon;
   wobei gegebenenfalls das wenigstens eine elektronegative Element in einer Gesamtmenge von ≤ 5 At.-% oder ≤ 1 At.-% bezogen auf die Menge von O vorhanden ist.

12. Mischphasenoxid nach einem der vorstehenden Ansprüche, wobei das interpenetrierende Gemisch aus der ersten Phase und der zweiten Phase keine Kern/Schale-Struktur bildet.

13. Zusammensetzung umfassend das Mischphasenoxid nach einem der Ansprüche 1-12 und wenigstens eine andere Komponente; wobei die wenigstens eine andere Komponente gegebenenfalls ausgewählt ist aus einem Bindemittel, einem Lösungsmittel, einem leitfähigen Zusatzstoff, einem anderen aktiven Elektrodenmaterial und Gemischen davon.

14. Elektrode umfassend das Mischphasenoxid nach einem der Ansprüche 1-12 als aktives Elektrodenmaterial; wobei gegebenenfalls das Mischphasenoxid wenigstens 25 Gew.-%, wenigstens 50 Gew.-% oder wenigstens 75 Gew.-% des gesamten aktiven Elektrodenmaterials in der Elektrode bildet; oder wobei das Mischphasenoxid das einzige aktive Elektrodenmaterial in der Elektrode ist.

15. Metallionenbatterie umfassend die Elektrode nach Anspruch 14, wobei die Metallionenbatterie gegebenenfalls eine Lithiumionen-Batterie ist und die Elektrode die Anode bildet; und/oder eine Lithiumionen-Batterie mit einem reversiblen Anodenaktivmaterial mit einer spezifischen Kapazität von mehr als 230 mAh/g bei 23 mA/g ist, wobei die Batterie mit Stromdichten relativ zu dem Anodenaktivmaterial von 230 mA/g oder mehr oder 1000 mA/g oder 2000 mA/g oder mehr oder 4000 mA/g oder mehr geladen und entladen werden kann, während mehr als 70 % der Anfangs-Zellenkapazität bei 23 mA/g erhalten bleiben.

**Revendications**

1. Oxyde à phases mixtes destiné à être utilisé comme matériau d'électrode actif ;

   dans lequel l'oxyde à phases mixtes comprend Nb et Ti et comprend en outre M(III) et/ou M(II) ;
   dans lequel M(III) est choisi parmi Cr, Al, Ga et leurs mélanges ;
   M(II) est choisi parmi Zn, Cu, Mg et leurs mélanges ;
   dans lequel l'oxyde à phases mixtes comprend un mélange interpénétrant d'une première phase et d'une seconde phase ;
   dans lequel la première phase a la structure cristalline de $TiNb_2O_7$ et la seconde phase a la structure cristalline de

$Zn_2Nb_{34}O_{87}$.

2. Oxyde à phases mixtes selon la revendication 1, dans lequel un diagramme de XRD de l'oxyde à phases mixtes présente (i) un pic A attribué à la première phase à $2\theta = 26,0 \pm 0,1°$ ; et/ou (ii) un pic B attribué à la seconde phase à $2\theta = 24,9 \pm 0,1°$, éventuellement dans lequel le rapport de l'intensité $I_B$ du pic B sur l'intensité $I_A$ du pic A est $0 < I_B / I_A \leq 0,4$, ou $0,01 \leq I_B / I_A \leq 0,25$, ou $0,05 \leq I_B / I_A \leq 0,22$, ou $0,07 \leq I_B / I_A \leq 0,16$.

3. Oxyde à phases mixtes selon la revendication 1 ou la revendication 2, dans lequel le rapport pondéral de la première phase sur la seconde phase est de 199:1 à 1:1, ou 99:1 à 3:1, ou 50:1 à 8:1.

4. Oxyde à phases mixtes selon l'une quelconque des revendications précédentes, dans lequel (i) la première phase forme au moins 85 % en poids, ou au moins 90 % en poids, ou au moins 92 % en poids de l'oxyde à phases mixtes ; et/ou (ii) la première phase et la seconde phase forment au moins 80 % en poids, au moins 90 % en poids, ou au moins 95 % en poids de l'oxyde à phases mixtes.

5. Oxyde à phases mixtes selon l'une quelconque des revendications précédentes, comprenant 66-80 % at de Nb, 33-17 % at de Ti, et comprenant en outre > 0-1 % at de M(III) et/ou > 0-2 % at de M(II) par rapport à tous les cations.

6. Oxyde à phases mixtes selon l'une quelconque des revendications précédentes, dans lequel la quantité combinée de M(III) et de M(II) est $\geq 0,05$ % at ou $\geq 0,5$ % at ou $\geq 0,6$ % at par rapport à la quantité de Nb.

7. Oxyde à phases mixtes selon l'une quelconque des revendications précédentes, dans lequel le rapport atomique Ti: Nb est d'au moins 0,3: 1, ou au moins 0,4: 1, ou 0,42: 1 à 0,5: 1.

8. Oxyde à phases mixtes selon l'une quelconque des revendications précédentes, dans lequel :

   (i) l'oxyde à phases mixtes comprend M(III), ou comprend M(III) et M(II) ; et/ou
   (ii) M(III) est Cr, Al et leurs mélanges et M(II) est Zn ; et/ou
   (iii) M(III) est Cr, Al et leurs mélanges ; ou dans lequel M(III) est Cr ; et/ou
   (iv) M(II) est Zn, Cu, et leurs mélanges ; ou dans lequel M(II) est Zn ; et/ou
   (v) l'oxyde à phases mixtes comprend M(III) et M(II), M(III) étant Cr et M(II) étant Zn.

9. Oxyde à phases mixtes selon l'une quelconque des revendications précédentes, dans lequel l'oxyde à phases mixtes :

   (i) est sous forme particulaire, éventuellement dans lequel l'oxyde à phases mixtes a un diamètre de particule $D_{50}$ dans la plage de 0,1-100 $\mu$m, ou 0,5-50 $\mu$m, ou 1-20 $\mu$m ; et/ou
   (ii) a une surface BET dans la plage de 0,1-100 m$^2$/g, ou 0,25-50 m$^2$/g, ou 0,5-20 m$^2$/g ; et/ou
   (iii) a une taille de cristallite supérieure à 180 nm, ou supérieure à 200 nm, ou supérieure à 225 nm, ou supérieure à 250 nm.

10. Oxyde à phases mixtes selon l'une quelconque des revendications précédentes, comprenant en outre au moins un élément supplémentaire ; éventuellement, dans lequel l'élément supplémentaire est choisi parmi :

    (i) Zr, Hf, V, Fe, Ta, Mo, W, Mn, Co, Ni, Cd, B, Si, Sn, P, et leurs mélanges ; ou
    (ii) Zr, V, Fe, Mo, W, Mn, Co, Ni, Cd, B, Si, P, et leurs mélanges ; ou
    (iii) Zr, V, Fe, Mo, W, P et leurs mélanges ;

    éventuellement, dans lequel l'au moins un élément supplémentaire est présent en une quantité totale de $\leq 5$ % at ou $\leq 1$ % at ou $\leq 0,5$ % at par rapport à la quantité de Nb.

11. Oxyde à phases mixtes selon l'une quelconque des revendications précédentes, comprenant en outre au moins un élément électronégatif choisi parmi :

    (i) F, Cl, Br, I, N, S, Se et leurs mélanges ; ou
    (ii) F, Cl, N, S et leurs mélanges ; ou
    (ii) F, N et leurs mélanges ;
    éventuellement, dans lequel l'au moins un élément électronégatif est présent en une quantité totale de $\leq 5$ % at ou

≤ 1 % at par rapport à la quantité de O.

12. Oxyde à phases mixtes selon l'une quelconque des revendications précédentes, dans lequel le mélange interpénétrant de la première phase et de la seconde phase ne forme pas une structure noyau/enveloppe.

13. Composition comprenant l'oxyde à phases mixtes selon l'une quelconque des revendications 1-12 et au moins un autre composant ; éventuellement, dans laquelle l'au moins un autre composant est choisi parmi un liant, un solvant, un additif conducteur, un matériau d'électrode actif différent, et leurs mélanges.

14. Électrode comprenant l'oxyde à phases mixtes selon l'une quelconque des revendications 1-12 en tant que matériau d'électrode actif ; éventuellement, dans laquelle l'oxyde à phases mixtes forme au moins 25 % en poids, au moins 50 % en poids ou au moins 75 % en poids du matériau d'électrode actif total dans l'électrode ; ou dans laquelle l'oxyde à phases mixtes est le seul matériau d'électrode actif dans l'électrode.

15. Batterie métal-ion comprenant l'électrode selon la revendication 14, éventuellement dans laquelle la batterie métal-ion est une batterie lithium-ion et l'électrode forme l'anode, et/ou est une batterie lithium-ion ayant une capacité spécifique de matériau actif d'anode réversible supérieure à 230 mAh/g à 23 mA/g, dans laquelle la batterie peut être chargée et déchargée à des densités de courant par rapport au matériau actif d'anode de 230 mA/g ou plus, ou 1 000 mA/g ou plus, ou 2 000 mA/g ou plus, ou 4 000 mA/g ou plus tout en conservant plus de 70 % de la capacité cellulaire initiale à 23 mA/g.

Figure 1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120052401 A1
- US 20150086872 A1
- US 20190296343 A1
- US 20140120404 A1
- US 20210376307 A1
- EP 3667805 A1
- US 20150125753 A1

**Non-patent literature cited in the description**

- **GRIFFITH et al.** *J. Am. Chem. Soc.*, 2016, vol. 138 (28), 8888-8899